# EUROPEAN PATENT APPLICATION

(11) **EP 0 533 361 A1**
(43) Date of publication of application: **24.03.1993**
(21) Application number: 92307761.4
(22) Date of filing: 26.08.1992
(51) Int. Cl.: G06F 9/46, G06F 13/26, G06F 15/16

(54) **Interrupt handling in a computer system**

(30) Priority: 17.09.1991 US 761082
(71) Applicant: NCR International, Inc., Dayton, Ohio 45479 (US)
(72) Inventor: Smoak III, Wilson E., W. Columbia, SC 29169 (US)
(74) Representative: Robinson, Robert George

(57) **Abstract**

In a computer having multiple processors, interrupts are ranked according to the importance of the peripherals sending them. The processors are also ranked according to the relative importance of the tasks which they are performing. The most important interrupt is then routed to the processor performing the least important task. In addition, any processor is permitted to block out specific interrupts from itself. Furthermore, when a given interrupt is accepted by any processor, all further interrupts originating from the same peripheral are blocked from all processors, until the servicing processor has completed the given interrupt routine.

## Description

This invention relates to handling interrupt requests in a computer system having a plurality of processors.

Some computers have multiple processors and multiple peripherals. Whenever one of the peripherals wishes to request that a processor perform some activity for it, the peripheral makes an interrupt request. Since some or all of the processors may currently be performing tasks, it will be appreciated that servicing an interrupt request from a peripheral may cause disruption of the task currently being undertaken by the processors of the system.

It is an object of the present invention to provide a method of handling interrupt request in a computer system including a plurality of processors, wherein disruption of the tasks currently being performed by the processors is minimized.

Therefore, according to one aspect of the present invention, there is provided a method of handling interrupt request in a computer system including a plurality of processors, characterized by the steps of: ranking interrupt request in order of priority; determining a highest priority interrupt request; ranking the processors in order of priority, based on their current tasks; and assigning said highest priority interrupt request to the lowest priority processor.

According to another aspect of the present invention, there is provided a computer system including a plurality of processors, characterized by: interrupt request supply means adapted to supply interrupt request; first ranking means adapted to rank said interrupt requests in order of priority; first selection means adapted to select a highest priority interrupt request; second ranking means adapted to rank the processors in order of priority, based on their current tasks; second selection means adapted to select a processor having lowest priority; and assigning means adapted to assign said highest priority interrupt request to the lowest priority processor.

One embodiment of the present invention will now be described by way of example, with reference to the accompanying drawings, in which:
Figure 1 is a flow chart illustrating one form of the invention.
Figure 2 illustrates multiple processors, each having an associated controller and associated registers.

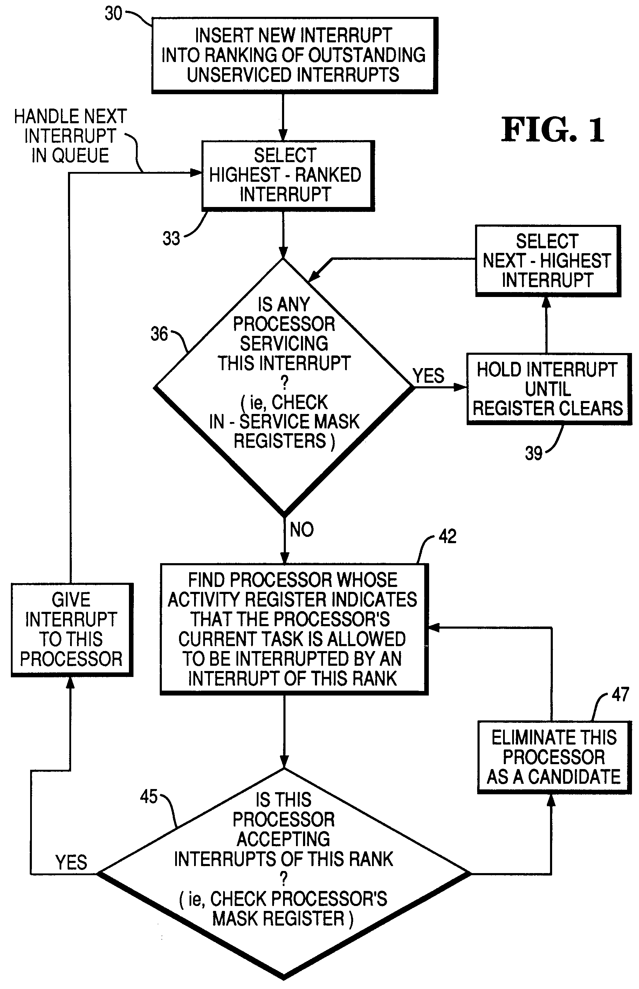

The functioning of the preferred embodiment includes a complex series of interactions among different components. Figure 1 is a simplification of these interactions. Further, Figure 1 is not unique: a different flow chart could be used to describe these same interactions.

Still further, as will be explained later, one feature of the embodiment is a two-fold inquiry of (1) finding a processor which is performing the least important task and (2) inquiring whether this processor has blocked out interrupts of the type in question. Figure 1 indicates that these inquiries are made in a specific sequence. However, in the general case, other sequences can be taken for these two inquiries, as well as for the other events of Figure 1.

Prior to the events occurring in Figure 1, each interrupt is given a relative priority, or ranking. This ranking can be done in hardware, at the time of manufacture of the computer. For example, in a case where each peripheral has a separate interrupt line, the different interrupt lines can be arranged in a row from left to right, in ascending order of importance. Further, this ranking can be alterable, as by using jumper cables. For example, a row of three incoming lines A, B, C can be rearranged by jumpers to the order B, C, A.

In addition, there are well-known integrated circuits which receive numerous input lines, select the one of highest priority, and produce a signal identifying the selected one. The 74-148 priority encoder circuit is a simple example.

Another case is that where the interrupts are "vectored," meaning generally that a single interrupt line leads to a processor. All peripherals can "pull" this common line when they want to interrupt the processor. When the processor sees a "pull" on the line, the processor examines a register, where the "pulling" peripheral has placed its identity. The processor thus obtains a "vector" leading to the "pulling" peripheral.

Clearly, with vectored interrupts, it is straightforward to rank them. For example, each peripheral can store a rank number along with its identity. Or each peripheral can be assigned one memory location in a bank of locations of ascending rank. The processor scans the group in response to an interrupt request.

Therefore, giving a rank to each interrupt line, or interrupt signal, is within the scope of one skilled in the art.

Whenever a new interrupt request is detected, it is, in effect, placed into a queue, according to its rank, as indicated in block 30 in Figure 1. Of course, if there are no unserviced interrupts when the new interrupt arrives, it will become the sole member of the queue. Then, as in block 33, the interrupt having the highest priority number (ie, highest rank) is selected from the queue. This selected interrupt will be called the "candidate interrupt."

Next, an inquiry is made as to whether the candidate interrupt is already being serviced by one of the processors, as indicated by block 36. That is, the peripheral responsible for the candidate interrupt could have recently made an interrupt request that is still being serviced. If YES, then the candidate interrupt is held up, in block 39, until the present servicing terminates.

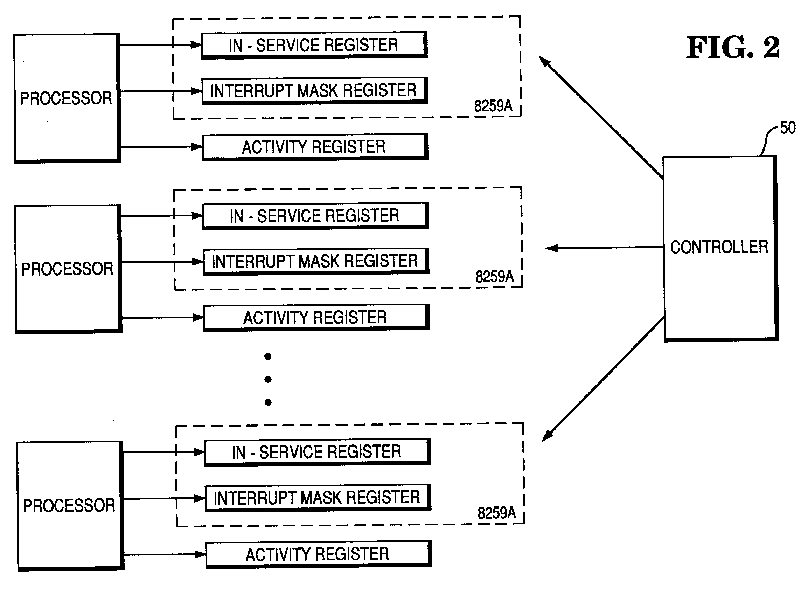

The inquiry is made by examining IN-SERVICE registers. That is, as indicated in Figure 2, each processor has an IN-SERVICE register where it sets a flag corresponding to the interrupt which it services, and removes the flag when the service terminates.

For example, assume 8 peripherals, and thus 8 possible interrupts. Each IN-SERVICE register will have 8 flags, one for each interrupt. Assume peripheral 3 makes an interrupt request which is given to processor 5. When processor 5 begins servicing this interrupt, it sets flag number 3 in its IN-SERVICE register. Then, at a later time, if the same peripheral 3 makes another interrupt request, block 36 in Figure 1 will seek a processor to accept this new interrupt. In so doing, block 36 examines all the IN-SERVICE registers. When block 36 reaches the IN-SERVICE register for processor 5, it learns that this processor is already servicing this interrupt. Consequently, block 36 places the candidate interrupt 3 on hold, as indicated by block 39.

If the answer to the inquiry of block 36 is NO, then the logic proceeds to block 42, where a candidate processor is sought, based on the relative importance of each processor's respective task, or activity.

Block 42 seeks a processor whose present activity is sufficiently unimportant to warrant interruption by the candidate interrupt. That is, in general, each processor will be executing a different task. Some tasks are more important than others. For example, running system code (as in the kernel) could be more important than running user code (such as an applications program like a word processor). Another example is that an idle processor is doing something less important than a running processor.

Each possible task is given a relative rank in a manner determined by the architect of the system. Ascribing such ranks can be done in ways known in the art. Each processor stores the rank of its present activity into its own ACTIVITY register, shown in Figure 2.

Block 42 examines the ACTIVITY register of each processor. When block 42 finds a processor executing a task of sufficiently low importance, block 42 identifies that processor as a candidate for receipt of the highest priority interrupt. The logic proceeds to block 45.

Block 45 inquires whether the candidate processor is presently accepting interrupts of the present rank. Each processor has an INTERRUPT MASK register, as shown in Figure 2. Each processor, under software control, can place a number into the INTERRUPT MASK register which indicates the lowest-ranked interrupt which will be accepted. For example, if the processor loads the number "6" into the INTERRUPT MASK register, the processor will not accept any interrupts of rank 6 or below. The processor will only accept interrupts of rank 7 or higher. In practice, the mask register has a bit for each interrupt request. The processor sets the bit, or bits, corresponding to the interrupts which will be accepted.

If the inquiry of block 45 indicates that the candidate processor will not accept the candidate interrupt, then the candidate is eliminated, as indicated in block 47, and block 42 re-cycles, to find another candidate processor.

If the inquiry indicates that the candidate processor will accept the candidate interrupt, then a match is found. The candidate interrupt is routed to the candidate processor. The candidate processor sets the proper flag in its IN-SERVICE REGISTER, indicating that this interrupt is being serviced, for the benefit of block 36 in Figure 1. The flow chart returns to block 33 to select another candidate interrupt from the queue for matching with a processor.

There are numerous approaches to implementing the conceptual framework of Figure 1, all involving components and approaches known in the art. Preferably, each processor has its own interrupt handling system, such as the INTEL 8259A-2 integrated circuit. This integrated circuit contains the IN-SERVICE register and the INTERRUPT MASK register for each processor. The activities of Figure 1 are performed by apparatus located in block 50 in Figure 2.

## Claims

1. A method of handling interrupt request in a computer system including a plurality of processors, characterized by the steps of: ranking interrupt request in order of priority; determining a highest priority interrupt request; ranking the processors in order of priority, based on their current tasks; and assigning said highest priority interrupt request to the lowest priority processor.

2. A method of according to claim 1, characterized by the step of determining whether any processor is already servicing a determined highest priority interrupt request, and if so, deferring servicing of the determined highest priority interrupt request and selecting a next highest priority interrupt request for assignment to said lowest priority processor.

3. A method according to claim 1 or claim 2, characterized by the step of determining whether each processor is allowed to be interrupted by an interrupt request having the determined highest priority prior to said step of assigning.

4. A computer system including a plurality of processors, characterized by: interrupt request supply means adapted to supply interrupt request; first ranking means adapted to rank said interrupt requests in order of priority; first selection means adapted to select a highest priority interrupt request; second ranking means adapted to rank the processors in order of priority, based on their current tasks; second selection means adapted to select a processor having lowest priority; and assigning means adapted to assign said highest priority interrupt request to the lowest priority processor.

5. A computer system according to claim 4, characterized in that said second ranking means includes a plurality of first registers, associated with respective processors, and each adapted to store a representation of the priority rank of the current activity of the associated processor, and in that said second selection means includes a plurality of second registers, associated with respective processors, and each adapted to store a representation of the interrupt request currently being serviced.

6. A computer system according to claim 5, characterized in that said second selection means includes a plurality of third registers, associated with respective processors, and each adapted to identify interrupt requests not permitted to be serviced by the associated processor.
